# EUROPEAN PATENT APPLICATION

(11) **EP 4 496 110 A1**
(43) Date of publication of application: **22.01.2025**
(21) Application number: 22946221.3
(22) Date of filing: 16.06.2022
(51) Int. Cl.: H01M 50/538, H01M 10/0525

(54) **ELECTRODE ASSEMBLY, BATTERY CELL, BATTERY, AND ELECTRICAL DEVICE**

(71) Applicant: Contemporary Amperex Technology Co., Limited, Ningde, Fujian 352100 (CN)
(72) Inventor: CHAI, Zhisheng, Ningde, Fujian 352100 (CN); CHI, Qingkui, Ningde, Fujian 352100 (CN); JIN, Haizu, Ningde, Fujian 352100 (CN); GU, Hui, Ningde, Fujian 352100 (CN)
(74) Representative: Holt, Lucy Rose
(86) International application number: PCT/CN2022/099127
(87) International publication number: WO 2023/240527

(57) **Abstract**

Provided in embodiments of the present application are a battery cell, a battery, and an electrical device. The battery cell (100) comprises: positive electrode sheets (1), each comprising a positive electrode current collector (11) and a positive electrode active material layer (12), the positive electrode current collector (11) comprising a positive electrode main body part (111) and a positive electrode tab (112) led out from the positive electrode main body part (111), and the positive electrode active material layer (12) being arranged on at least part of the surface of the positive electrode main body part (111); and negative electrode sheets (2), stacked with the positive electrode sheets (1) in a first direction (x), each negative electrode sheet (2) comprising a negative electrode current collector (21). At least one of the positive electrode current collector (11) and the negative electrode current collector (21) is provided with a reinforcing layer (13) on the lead-out side of the positive electrode tab (112).

## Description

### Technical Field

The present application relates to the technical field of batteries, and in particular, to an electrode assembly, a battery cell, a battery, and a power consuming device.

### Background Art

Thanks to the advantages such as high energy density, high power density, numerous cycle uses, and long storage time, batteries such as lithium-ion batteries have been widely applied in electric vehicles.

However, how to enhance the safety of batteries of the electric vehicles in use has been always a problem in the industry.

### Summary of the Invention

An objective of the present application is to improve the safety of batteries in use.

According to a first aspect of the present application, provided is an electrode assembly, comprising:
an anode plate, comprising an anode current collector and an anode active material layer, wherein the anode current collector comprises an anode main body portion and an anode tab led out from the anode main body portion, and the anode active material layer is provided on at least part of a surface of the anode main body portion; and
a cathode plate configured to be stacked with the anode plate in a first direction, the cathode plate comprising a cathode current collector;
wherein at least one of the anode current collector and the cathode current collector is provided with a reinforcement layer on a lead-out side of the anode tab.

In this embodiment, since at least one of the anode current collector and the cathode current collector is provided with the reinforcement layer on the lead-out side of the anode tab, the strength of the anode plate and/or the cathode plate on the lead-out side of the anode tab can be improved. In this way, when the electrode assembly is vibrated up and down by external force, the amount of deformation of an end of the anode main body portion close to the anode tab can be reduced, and the anode main body portion can be prevented from being bent, thereby reducing damage to or shedding of the anode active material layer. When lithium ions in the anode plate diffuse to two sides during a cycle of a battery cell, the lithium ions can be prevented from precipitating in the area where the anode active material layer is located, improving the safety of the battery cell during use.

In some embodiments, the anode tab is led out in a second direction relative to the anode main body portion, the second direction being perpendicular to the first direction; and in the second direction, the reinforcement layer extends beyond the anode active material layer.

In this embodiment, the reinforcement layer extends beyond the anode active material layer in the second direction, so that when the electrode assembly is vibrated up and down by external force, the reinforcement layer can first withstand the acting force transmitted by the anode tab to protect a part of the anode active material close to the anode tab, thereby reducing the amount of deformation of the end of the anode main body portion close to the anode tab, preventing the anode main body portion from being bent by pressure, reducing damage to or shedding of the anode active material layer, and improving the safety of the battery cell during operation.

In some embodiments, at least part of a surface of the cathode current collector is provided with a cathode active material layer; and the reinforcement layer provided on the anode current collector is connected to the anode active material layer, and/or the reinforcement layer provided on the cathode current collector is connected to the cathode active material layer.

In this embodiment, the reinforcement layer is connected to the active material layer so that the reinforcement layer and the active material layer form an integral structure, and the strength of the end of the anode current collector or the cathode current collector close to the anode tab can be increased, improving the reinforcement effect. The active material layer may be the anode active material layer or the cathode active material layer.

In some embodiments, the anode tab is led out in a second direction relative to the anode main body portion, the second direction being perpendicular to the first direction; and in the second direction, the reinforcement layer does not extend beyond an edge of a free end of the anode tab.

In this embodiment, the reinforcement layer does not extend beyond the edge of the free end of the anode tab in the second direction, so that it is possible to not only leave enough electrical connection length for the anode tab, but also leave a length for bending the anode tab, so as to perform a flattening process when welding the anode tab to an anode connector. In this way, the reliability of the electrical connection between the anode tab and the anode connector can be ensured, thereby reducing the influence of the reinforcement layer on the operation performance of the battery cell.

In some embodiments, the electrode assembly further comprises a separator, wherein the separator is configured to separate the anode plate from the cathode plate, the anode tab is led out in a second direction relative to the anode main body portion, the second direction being perpendicular to the first direction, and at least part of a surface of the cathode current collector is provided with a cathode active material layer; and in the second direction, an edge of the separator extends beyond an edge of the anode active material layer and an edge of the cathode active material layer, and the reinforcement layer does not extend beyond an edge of the separator that is located on an anode side of the electrode assembly.

In this embodiment, by making the reinforcement layer not extend beyond the edge of the separator that is located on the anode side of the electrode assembly, further, sufficient electrical connection length is left for the anode tab and a length for bending the anode tab is left, so as to perform a flattening process when welding the anode tab to an anode connector. In this way, the reliability of the electrical connection between the anode tab and the anode connector can be ensured, thereby reducing the influence of the reinforcement layer on the operation performance of the battery cell. Moreover, it is also possible to avoid increasing the height of the electrode assembly due to the provision of the reinforcement layer, and ensure that the capacity of the battery cell is not affected.

In some embodiments, the cathode current collector comprises a cathode main body portion and a cathode tab led out from the cathode main body portion, and the anode tab and the cathode tab are led out in opposite directions.

In this embodiment, the anode tab and the cathode tab are led out in opposite directions, so that if a reinforcement layer is provided on the anode current collector, the influence of protrusions or unevenness of the reinforcement layer in the first direction on the cathode tab and the cathode active material layer can be avoided, so as to prevent the reinforcement layer from affecting the performance of the battery cell, allowing the thickness of the reinforcement layer to be increased, and reducing the requirements for the dimensional accuracy of the reinforcement layer. If a reinforcement layer is provided on the cathode current collector, since the cathode tab is arranged on the side away from the anode tab, the reinforcement layer can be provided by extending the width of the cathode current collector in the second direction, so as to improve support for the end of the anode main body portion. Therefore, such a structure makes it easier to provide a reinforcement layer and can achieve a better effect of preventing the deformation of the end of the anode main body portion.

In some embodiments, at least part of a surface of the cathode current collector is provided with a cathode active material layer; and the anode current collector is provided with the reinforcement layer at least on a side where the anode active material layer is provided, and/or the cathode current collector is provided with the reinforcement layer at least on a side where the cathode active material layer is provided.

In this embodiment, a reinforcement layer is provided at least on the side of the current collector that is provided with the active material layer, so that the connection between the reinforcement layer and the active material layer is facilitated, and it is possible to strengthen the effect of increasing the strength of the end of the current collector, prevent the active material layer from shedding due to the deformation of the current collector, and easily protect the edge of the active material layer to prevent the active material layer from shedding after long-term use of the battery cell.

In some embodiments, the anode tab is led out in a second direction relative to the anode main body portion, the second direction being perpendicular to the first direction, and at least part of a surface of the cathode current collector is provided with a cathode active material layer; and in the second direction, the anode active material layer extends beyond the cathode active material layer.

In this embodiment, during the use of the electrode assembly, the lithium ions in the area where the cathode active material layer of the cathode plate is located pass through the separator and are intercalated in the anode active material layer of an adjacent anode plate. Since the anode active material layer extends beyond the cathode active material layer, it is possible to ensure that the lithium ions are intercalated in the anode active material layer as much as possible, reducing the risk of lithium precipitation, while also enabling the cathode active material layer to fully function.

In some embodiments, the strength of the reinforcement layer exceeds that of the anode active material layer.

In this embodiment, the strength of the end of the anode current collector or the cathode current collector can be improved by increasing the strength of the reinforcement layer itself. On the basis of meeting the strength requirements, the thickness of the reinforcement layer can be minimized to prevent same from affecting the adjacent plate, so as to prevent the provision of the reinforcement layer from affecting the weight of the electrode assembly, and the weight added to the electrode assembly can be minimized.

In some embodiments, the material of the reinforcement layer comprises adhesive and ceramic particles.

In this embodiment, the reinforcement layer is formed by the adhesive and the ceramic particles. The adhesive can provide better adhesion between the reinforcement layer and the current collector or the active material layer, preventing the reinforcement layer from shedding. Due to their high hardness, the ceramic particles can increase the strength by being mixed into the adhesive.

In some embodiments, the reinforcement layer is provided on the anode current collector, the reinforcement layer comprises a first reinforcement section, and the first reinforcement section is in contact with a surface of the anode current collector.

In this embodiment, by attaching the first reinforcement section directly to the anode current collector at an outer end of the anode active material layer, the strength of the anode current collector in the region of the outer end of the anode active material layer can be increased. When the electrode assembly is vibrated in the second direction, the vibration acting force will first act on the first reinforcement section, thereby protecting the anode active material layer. Moreover, by increasing the strength of the end of the anode current collector, the amount of deformation of the anode current collector can be reduced, thereby preventing the anode active material layer from being damaged or shed, improving the operation safety of the battery cell.

In some embodiments, the reinforcement layer further comprises a second reinforcement section, the second reinforcement section is connected to the first reinforcement section, and the second reinforcement section covers an edge area of the anode active material layer, such that the second reinforcement section is provided on the anode current collector by means of the anode active material layer.

In this embodiment, the dimension of the reinforcement layer in the second direction can be increased by providing both the first reinforcement section and the second reinforcement section, so as to improve the strength of the end of the anode main body portion as much as possible, and reduce the amount of deformation of the end of the anode main body portion. Moreover, the first reinforcement section is located in the edge area of the anode active material layer in the second direction, so that when the electrode assembly is vibrated in the second direction, the vibration acting force will first act on the first reinforcement section and does not directly act on the anode active material layer, and the second reinforcement section can protect the outer side of the anode active material layer in the first direction, and can form a position-limiting constraint on the anode active material layer to prevent the anode active material layer from shedding due to arching. Since the first reinforcement section and the second reinforcement section completely surround the end of the anode active material layer close to the anode tab, the strength increasing effect can be optimized, and the safety of the electrode assembly during operation can be greatly improved.

In some embodiments, in the first direction, an outer surface of the first reinforcement section does not protrude from an outer surface of the second reinforcement section.

In this embodiment, considering that the second reinforcement section is provided on the outer surface of the anode active material layer and has a larger thickness, while the anode plate is an empty foil area with a smaller thickness, the outer surface of the first reinforcement section is lower than the outer surface of the second reinforcement section, so that it is possible to achieve thickness transition and reduce stress concentration.

In some embodiments, the anode tab is led out in a second direction relative to the anode main body portion, the second direction being perpendicular to the first direction, and at least part of a surface of the cathode current collector is provided with a cathode active material layer; and in the second direction, a width dimension b of the second reinforcement section does not exceed a third distance a, the third distance a being a distance in the second direction between an edge of the cathode active material layer that is located on an anode side of the electrode assembly and an edge of the anode active material layer that is located on the anode side of the electrode assembly.

In this embodiment, it is possible that the lithium ions deintercalated from the cathode plate directly reach the anode active material layer during charging, so as to prevent the reinforcement layer from affecting the movement of the lithium ions to the anode active material layer for attachment, and prevent the occurrence of lithium precipitation which causes rapid attenuation of the capacity of the battery cell, thus ensuring the performance of the battery cell and improving the safety of use.

In some embodiments, two sides of the anode current collector in the first direction are each provided with the anode active material layers, and an outer side of the anode active material layer on each side is provided with the second reinforcement section, a first distance d1 between outer surfaces of the anode active material layers on the two sides and a second distance d2 between outer surfaces of the second reinforcement sections on the two sides satisfy the following relationship: d1 ≤ d2 ≤ 1.3*d1.

In this embodiment, it is possible that by providing second reinforcement sections on the outer sides of the anode active material layers on two sides, the anode active material layers on the two sides can be protected, improving the strength of the end of the anode main body portion. Moreover, by making the first distance d1 and the second distance d2 satisfy the above relationship, and matching the thickness of the reinforcement layer with the thickness of a main body area of the anode plate, the thickness of the reinforcement layer can not only meet the requirements for increasing the strength, but can also prevent the reinforcement layer from being too thick, which causes the separator to bulge too much and even affects the adjacent cathode plate, thereby ensuring the performance of the electrode assembly. In addition, it is possible to prevent the anode plate from being transferred in the form of a roll during the production process and prevent an edge of the roll from bulging during the production process, to avoid cracking of the anode plate.

In some embodiments, the reinforcement layer is provided on the cathode current collector, and the reinforcement layer is entirely in contact with a surface of the cathode current collector.

In this embodiment, by attaching the reinforcement layer directly to the cathode current collector at an outer end of the cathode active material layer, the strength of the cathode current collector in the region of the outer end of the cathode active material layer can be increased. When the reinforcement layer extends beyond the end of the anode active material layer in the second direction, a stable support effect can be formed. When the electrode assembly is vibrated in the second direction, the vibration acting force will first act on the reinforcement layer, and the reinforcement layer will withstand the vibration acting force, thereby preventing the end of the anode current collector close to the anode tab from being deformed, to protect the anode active material layer, thereby preventing the anode active material layer from being damaged or shed, and improving the operation safety of the battery cell.

In some embodiments, at least part of the surface of the cathode current collector is provided with a cathode active material layer; and in the first direction, an outer surface of the reinforcement layer does not protrude from an outer surface of the cathode active material layer.

In this embodiment, considering that in order to avoid the lithium precipitation, the anode active material layer extends beyond the cathode active material layer in the second direction, so that the reinforcement layer and the anode active material layer are arranged adjacent to each other, and separated only by the separator therebetween, and the outer surface of the reinforcement layer does not protrude from the outer surface of the cathode active material layer. It is possible to prevent the reinforcement layer from exerting an acting force on the anode active material layer, prevent the anode current collector and the cathode current collector from being bent, which causes the shedding of the active material, and improve the operation safety of the battery cell.

In some embodiments, the anode current collector and the cathode current collector are each provided with a reinforcement layer on the lead-out side of the anode tab, the anode tab is led out along a second direction relative to the anode main body portion, the second direction being perpendicular to the first direction, and in the second direction, the reinforcement layer provided on the anode current collector extends beyond the reinforcement layer provided on the cathode current collector.

In this embodiment, by providing a reinforcement layer in the area of each of the anode current collector and the cathode current collector close to the anode tab, it is possible to improve the self-strength of the end of the anode main body portion close to the anode tab. When the electrode assembly is vibrated in the second direction, even if the vibration acting force is transmitted to the end of the anode main body portion, the amount of deformation can be reduced due to the increase in the strength of the end of the anode main body portion, thereby reducing damage to or shedding of the anode active material layer. Moreover, the reinforcement layer extending beyond the anode active material layer can form a stable support structure. When the electrode assembly is vibrated in the second direction, the reinforcement layer extending beyond the anode active material layer can form a stable support structure to prevent the vibration from being transmitted to the end of the anode main body portion, preventing the anode main body portion from being deformed, which causes the anode active material layer to be damaged or shed. Therefore, such a structure can maximize the operation safety of the battery cell.

Moreover, in the second direction, the reinforcement layer provided on the anode current collector extends beyond the reinforcement layer provided on the cathode current collector, so that when the electrode assembly is vibrated in the second direction, the reinforcement layer provided on the anode current collector can be used to withstand the vibration acting force first, so as to directly protect the end of the anode main body portion. When the vibration force is large, the reinforcement layer provided on the cathode current collector can then be used to provide support, to improve the compressive strength requirements of the electrode assembly.

According to a second aspect of the present application, a battery cell is provided, comprising:
a housing having an opening;
an electrode assembly of the above embodiments, which is arranged inside the housing; and
an end cap assembly configured to close the opening.

According to a third aspect of the present application, a battery is provided, comprising:
a case assembly; and
a battery cell of the above embodiments, the battery cell being arranged inside the case assembly.

According to a fourth aspect of the present application, a power consuming device is provided, comprising a battery cell of the above embodiments, the battery cell being configured to supply electric energy to the power consuming device; or a battery of the above embodiments, the battery being configured to supply electric energy to the power consuming device.

### Brief Description of the Drawings

In order to more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without making creative efforts.
FIG. 1 is a schematic structural diagram of a battery mounted to a vehicle according to some embodiments of the present application.
FIG. 2 is an exploded view of a battery according to some embodiments of the present application.
FIG. 3 is a diagram of the outline of a battery cell according to some embodiments of the present application.
FIG. 4 is an exploded view of a battery cell according to some embodiments of the present application.
FIG. 5 is a schematic structural diagram of an electrode assembly in a battery cell according to some embodiments of the present application.
FIG. 6 is a cross-sectional view of an anode side of an electrode assembly according to a first embodiment of the present application.
FIG. 7 is a cross-sectional view of an anode side of an electrode assembly according to a second embodiment of the present application.
FIG. 8 is a cross-sectional view of an anode side of an electrode assembly according to a third embodiment of the present application.
FIG. 9 is a cross-sectional view of a cathode side of an electrode assembly according to some embodiments of the present application.

In the accompanying drawings, the figures are not drawn to scale.

### List of reference signs:

1. anode plate; 11. anode current collector; 111. anode main body portion; 112. anode tab; 12. anode active material layer; 13. reinforcement layer; 131. first reinforcement section; 132. second reinforcement section;
2. cathode plate; 21. cathode current collector; 211. cathode main body portion; 212. cathode tab; 22. cathode active material layer; 23. insulating layer;
3. separator;
100. electrode assembly; 100'. electrode main body; K. winding axis; x - first direction; y - second direction;
200. battery cell; 210. housing; 211. opening; 220. end cap assembly; 221. end cap body; 222. electrode terminal; 230. anode connector; 240. cathode connector;
300. battery; 301. case assembly; 301A. receiving portion; 301B. first cover body; 301C. second cover body;
400. vehicle; 401. axle; 402. wheel; 403. motor; 404. controller.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example and are not intended to limit the scope of the present application. That is, the present application is not limited to the described embodiments.

In the description of the embodiments of the present application, the term "a plurality of" means two or more (including two), similarly the term "a plurality of groups" means two or more groups (including two groups), and the term "a plurality of pieces" means two or more pieces (including two pieces).

The present application uses the description of the orientations or positional relationships indicated by the terms "upper", "lower", "top", "bottom", "front", "rear", "inner", "outer", etc., which are merely for convenient description of the present application, rather than indicating or implying that a device referred to needs to have a particular orientation or be constructed and operated in a particular orientation, and therefore cannot be construed as limiting the scope of protection of the present application.

In addition, the terms "first", "second", "third", etc. are merely for descriptive purposes, and should not be construed as indicating or implying the relative importance. The term "perpendicular" does not mean being perpendicular in the strict sense, but within an allowable range of tolerance. The term "parallel" does not mean being parallel in the strict sense, but within an allowable range of tolerance. The orientation terms in the following description all indicate directions shown in the accompanying drawings, and do not limit the specific structure in the present application.

In the description of the present application, it should also be noted that the terms "mounting", "connecting", and "connection" should be interpreted in the broad sense unless explicitly defined and limited otherwise. For example, the connection may be a fixed connection, a detachable connection, or an integral connection, or may be a direct connection, or an indirect connection by means of an intermediate medium. For those of ordinary skill in the art, the specific meanings of the terms mentioned above in the present application can be construed according to specific circumstances.

The phrase "an embodiment" mentioned herein means that the specific features, structures and characteristics described in conjunction with the embodiment may be included in at least some embodiments of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

A battery cell may include a lithium-ion secondary battery, a lithium-ion primary battery, a lithium-sulfur battery, a sodium/lithium ion battery, a sodium-ion battery or a magnesium-ion battery, etc., which is not limited by the embodiments of the present application. The battery cell may be cylindrical, flat, cuboid or in another shape, which will also not be limited in the embodiments of the present application. The battery cells are generally classified into three types depending on the way of package: cylindrical battery cells, prismatic battery cells and pouch battery cells, which will also not be limited in the embodiments of the present application.

An existing battery cell generally includes a housing and an electrode assembly received in the housing, and the interior of the housing is filled with an electrolyte. The electrode assembly is mainly formed by stacking or winding a first electrode plate and a second electrode plate that have opposite polarities, and a separator film is generally provided between the first electrode plate and the second electrode plate. The portions of the first electrode plate and the second electrode plate that are coated with an active material form an electrode main body of the electrode assembly, and the portions of the first electrode plate and the second electrode plate that are not coated with the active material respectively form a first tab and a second tab. **In** a lithium-ion battery, the first electrode plate may be a cathode plate, which comprises a cathode current collector and cathode active material layers provided on two sides of the cathode current collector, wherein the material of the cathode current collector may be, for example, aluminum, and a cathode active material may be, for example, lithium cobalt oxide, lithium iron phosphate, ternary lithium or lithium manganate, etc.; and the second electrode plate may be anode plate, which comprises anode current collector and anode active material layers provided on two sides of the anode current collector, wherein the material of the anode current collector may be, for example, copper, and an anode active material may be, for example, graphite or silicon, etc. Alternatively, the first electrode plate may be an anode plate, and the second electrode plate may be a cathode plate. The first tab and the second tab may jointly be located at one end of a main body portion or respectively at two ends of the electrode main body. During the charging and discharging of the battery cell, the cathode active material and the anode active material react with the electrolyte, and the tabs are connected to terminals to form a current loop.

Current batteries have a problem of poor safety during use. The inventors have found through research that in a current cylindrical battery cell, an anode tab and a cathode tab are respectively led out from two ends of an electrode main body, and then welded to current collectors after being subjected to a flattening process. When a cylindrical battery is used as a traction battery in a vehicle, an electrode assembly will be vibrated up and down due to the bumps and vibrations that occur during traveling of the vehicle, thereby experiencing an upward or downward squeezing force. For the anode tab side, when the electrode assembly is vibrated up and down, the current collector connected to the anode tab will be bent by pressure, and in severe cases, yield deformation will occur. Then, external force is transmitted to the anode plate through the current collector, causing the anode plate to be bent slightly by pressure. After long-term use, the anode plate is bent, causing an active material layer to be damaged or even shed.

Since lithium ions in an anode plate of the cylindrical battery will diffuse to two ends of the plate in a width direction during a cycle of the cylindrical battery, when an anode active material of the anode plate is damaged or shed, the lithium ions may be precipitated in the area where the anode active material is shed, causing safety risks.

**In** order to solve the above problem, the inventors have thought that in order to improve the operation safety of the battery cell, it is necessary to reduce the degree of deformation of the anode plate on the side close to the anode tab, thereby preventing the anode active material from being damaged or shed.

Based on this improvement idea, the present application proposes an electrode assembly, comprising: an anode plate and a cathode plate stacked in an anode direction. The anode plate comprises an anode current collector and an anode active material layer. The anode current collector comprises an anode main body portion and an anode tab led out from the anode main body portion, and the anode active material layer is provided on at least part of a surface of the anode main body portion. The cathode plate comprises a cathode current collector. At least one of the anode current collector and the cathode current collector is provided with a reinforcement layer on a lead-out side of the anode tab.

Since at least one of the anode current collector and the cathode current collector is provided with the reinforcement layer on the lead-out side of the anode tab, the strength of the anode plate and the cathode plate on the lead-out side of the anode tab can be improved. In this way, when the electrode assembly is vibrated up and down, the anode current collector can be prevented from being bent by pressure, thereby reducing damage to or shedding of the anode active material, and improving the safety of the battery cell during use.

The battery cell in the embodiments of the present application is applicable to a battery and a power consuming device using such a battery cell, and the battery is also applicable to the power consuming device.

The power consuming device may be, for example, a mobile phone, a portable apparatus, a laptop, an electric motorcycle, an electric vehicle, a ship, a spacecraft, an electric toy, or an electric tool. For example, the spacecraft includes an airplane, a rocket, a space shuttle, or a spaceship. The electric toy includes a fixed or mobile electric toy, such as a game console, an electric vehicle toy, an electric ship toy, and an electric airplane toy. The electric tool includes an electric tool for metal cutting, an electric tool for grinding, an electric tool for assembling and an electric tool for railways, such as an electric drill, an electric grinder, an electric wrench, an electric screwdriver, an electric hammer, an electric impact drill, a concrete vibrator, and an electric planer.

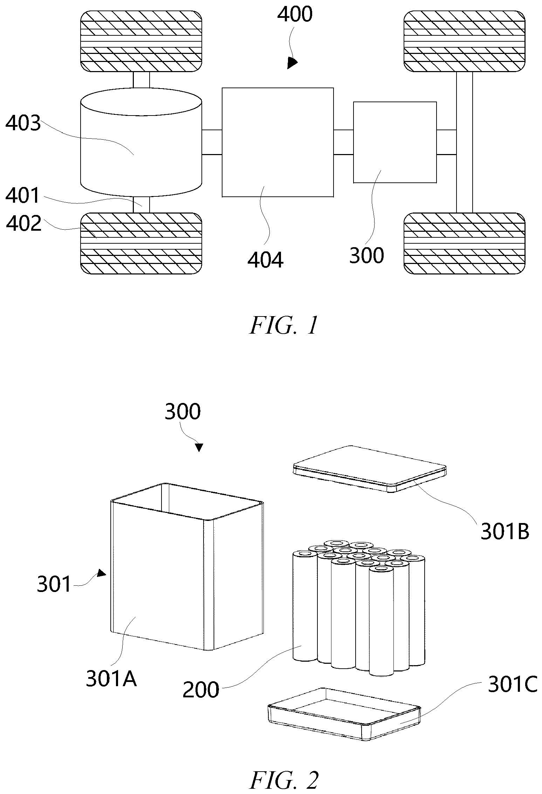

As shown in FIG. 1, the power consuming device may be a vehicle 400, for example, a new energy vehicle. The new energy vehicle may be a battery electric vehicle, a hybrid electric vehicle, an extended-range electric vehicle, or the like; alternatively, the power consuming device may also be an unmanned aerial vehicle, a ship, or the like. Specifically, the vehicle 400 may comprise an axle 401, wheels 402 connected to the axle 401, a motor 403, a controller 404 and a battery 300. The motor 403 is configured for driving the axle 401 to rotate, the controller 404 is configured for controlling operation of the motor 403, and the battery 300 may be arranged at the bottom, head, or tail of the vehicle 400, and configured for providing electric energy for operations of the motor 403 and other components in the vehicle.

As shown in FIG. 2, the battery 300 comprises a case assembly 301 and a battery cell 200. In the battery 300, one or more battery cells 200 may be provided. If a plurality of battery cells 200 are provided, the plurality of battery cells 200 may be in series connection, in parallel connection or in series-parallel connection, and the series-parallel connection refers to that the plurality of battery cells 200 are in series and parallel connection. It is possible that the plurality of battery cells 200 to be first connected in series or in parallel or in series-parallel to form a plurality of battery modules, and then the plurality of battery modules are connected in series or in parallel or in series-parallel to form a unit and are received inside the case assembly 301. It is also possible that all the battery cells 200 are directly connected in series, or in parallel, or in series-parallel, and a unit composed of all the battery cells 200 is then received inside the case assembly 301.

The case assembly 301 may be a part of a battery pack, and the case assembly 301 is detachably mounted to the power consuming device. Alternatively, the case assembly 301 may also be a space formed by a structural member in the power consuming device, for receiving the battery cell 200. For example, when the battery cell 200 is used in the vehicle 400, the case assembly 301 is a space formed by a vehicle frame for receiving the battery cell 200.

The case assembly 301 is hollow inside and used for receiving one or more battery cells 200, and the case assembly 301 may also be sized in different shapes according to the shape, number, combination manner and other requirements of the received battery cells 200. For example, the case assembly 301 may comprise: a receiving portion 301A, a first cover body 301B and a second cover body 301C. Two opposite ends of the receiving portion 301A both have openings, and the first cover body 301B and the second cover body 301C are respectively used for closing the openings at the two ends of the receiving portion 301A. In FIG. 2, the receiving portion 301A is of a rectangular cylindrical structure according to the arrangement of the plurality of battery cells 200.

The battery cell 200 may include, for example, a lithium-ion secondary battery, a lithium-ion primary battery, a lithium-sulfur battery, a sodium/lithium ion battery, or a magnesium-ion battery, etc.

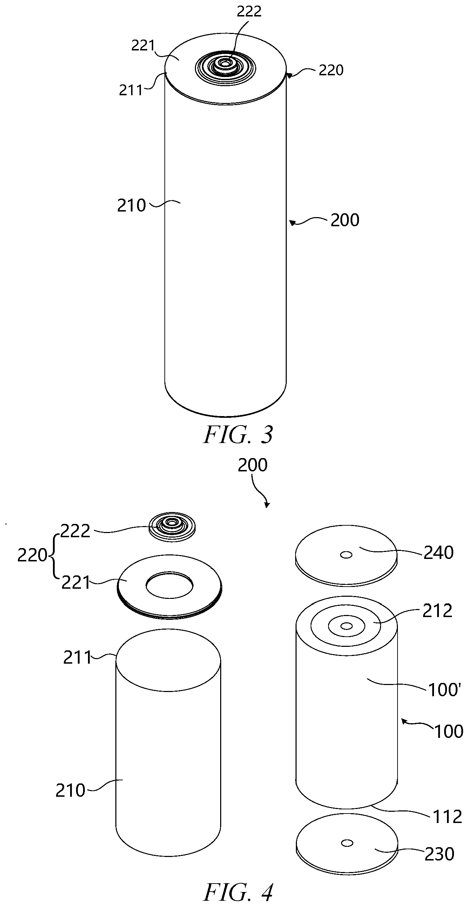

FIG. 3 is a schematic diagram of the outline of a battery cell 200 according to some embodiments. The battery cell 200 comprises a housing 210 and an end cap assembly 220. The housing 210 has an opening 211. The end cap assembly 220 closes the opening 211 and is connected to the housing 210 to form a shell of the battery cell 200. The end cap assembly 220 comprises an end cap body 221 and an electrode terminal 222. The electrode terminal 222 is arranged on the end cap body 221. FIG. 3 illustrates a cylindrical battery cell 200. Subsequent embodiments will also be illustrated by taking the cylindrical battery cell 200 as an example. Of course, the battery cell 200 of the present application may also have a flat shape, a cuboid shape, or another shape.

FIG. 4 is an exploded view of a battery cell 200 according to some embodiments. The battery cell 200 further comprises an electrode assembly 100, an anode connector 230, and a cathode connector 240. The electrode assembly 100 is located inside the housing 210, and the housing 210 is filled with an electrolyte solution. One or more electrode assemblies 100 may be provided according to actual use requirements. The electrode assembly 100 is mainly formed by stacking or winding an anode plate and a cathode plate, and a separator is generally arranged between the anode plate and the cathode plate. The electrode assembly 100 in FIG. 4 is rolled to form a cylindrical shape, or may be formed into a flat shape. Respective coated parts of the anode plate and the cathode plate constitute an electrode main body 100' of the electrode assembly 100, and uncoated parts of the anode plate and the cathode plate constitute an anode tab 112 and a cathode tab 212, respectively.

The anode tab 112 may be electrically connected to the housing 210 via the anode connector 230, and the housing 210 serves as an anode output electrode; and the cathode tab 212 may be electrically connected to the electrode terminal 222 via the cathode connector 240, and the electrode terminal 222 serves as a cathode output electrode. Optionally, openings 211 are provided at two ends of the housing 210, and the openings 211 at the two ends are closed by end cap assemblies 220. Each end cap assembly 220 is provided with an electrode terminal 222, and the anode tab 112 and the cathode tab 212 are respectively electrically connected to the electrode terminal 222 on the corresponding side.

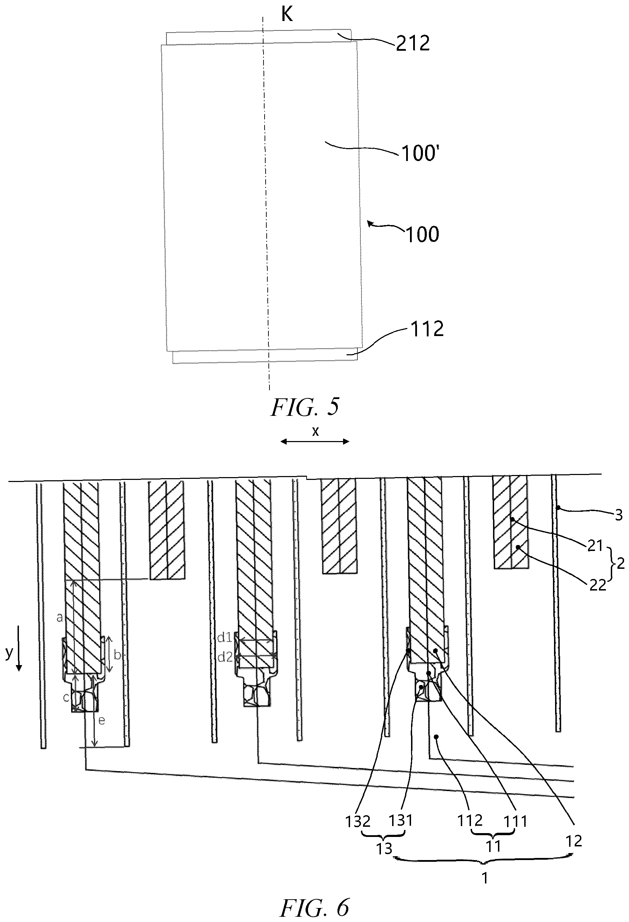

FIG. 5 is a front view of the electrode assembly in FIG. 4 according to some embodiments. The anode tab 112 and the cathode tab 212 may be respectively led out from two ends of the electrode main body 100' along a winding axis K, or may be led out from the same end of the electrode main body 100' along the winding axis K. The structure of the electrode assembly 100 will be described in detail below.

In some embodiments, as shown in FIGS. 6 to 8, the electrode assembly 100 comprises an anode plate 1 and a cathode plate 2. The anode plate 1 comprises an anode current collector 11 and an anode active material layer 12. The anode current collector 11 comprises an anode main body portion 111 and an anode tab 112 led out from the anode main body portion 111, and the anode active material layer 12 is provided on at least part of a surface of the anode main body portion 111. The cathode plate 2 is configured to be stacked with the anode plate 1 in a first direction x, and the cathode plate 2 comprises a cathode current collector 21. At least one of the anode current collector 11 and the cathode current collector 21 is provided with a reinforcement layer 13 on a lead-out side of the anode tab 112.

The anode plate 1 and the cathode plate 2 may both adopt an elongated strip structure. The cathode plate 2 and the anode plate 1 are stacked in the first direction x, and the first direction x may be a thickness direction of the anode plate 1 or the cathode plate 2. The electrode assembly 100 may further comprise a separator 3 for separating the anode plate 1 from the cathode plate 2 to achieve insulation between the anode plate 1 and the cathode plate 2. For example, the anode plate 1 and the cathode plate 2 and the separator 3 may be wound around the winding axis K to form a wound structure, and the separator 3 is located between the anode plate 1 and the cathode plate 2. Optionally, the electrode assembly 100 may also adopt a laminated structure.

For the electrode assembly 100 of a wound structure, the first direction x may be a direction in which the cathode plate 2 and the anode plate 1 are stacked, or the normal direction of a surface of the cathode plate 2 or the anode plate 1. At different positions of the cathode plate 2 and the anode plate 1 along a winding direction, the first direction x will change with the change of the winding direction. For a cylindrical electrode assembly 100, the first direction x is the normal direction of the circular arc-shaped cathode plate 2 or the anode plate 1. For a flat electrode assembly 100, this structure is not shown in the figures. For a flat section, the first direction x is a direction perpendicular to the flat section. For a circular arc section, the first direction x is the normal direction of the circular arc section.

The anode tab 112 is led out in a second direction y relative to the anode main body portion 111. The second direction y is a one-way direction, and the second direction y is a lead-out direction of the anode tab 112. The anode tab 112 may be provided at an end of the anode main body portion 111 in the second direction y, the second direction y is perpendicular to the first direction x, and the second direction y is consistent with the width direction of the anode plate 1 or the cathode plate 2. Optionally, the anode tab 112 led out from the anode main body portion 111 may continuously extend in a length direction of the anode plate 1 without punching to form a full tab. Alternatively, punching is performed on the basis of a continuous tab to form a sawtooth structure in a length direction of the anode plate 1. The punching position may coincide with the position where the anode tab 112 is connected to the anode main body portion 111, or may be offset by a preset distance in the second direction y relative to the position where the anode tab 112 is connected to the anode main body portion 111.

For example, the anode current collector 11 may be made of copper, and the anode active material layer 12 may be made of graphite, silicon, etc., and may be attached to the anode current collector 11 by coating, spraying, or other means.

The cathode plate 2 comprises a cathode current collector 21 and a cathode active material layer 22. The cathode current collector 21 comprises a cathode main body portion 211 and a cathode tab 212 led out from the cathode main body portion 211, and the cathode active material layer 22 is provided on at least part of a surface of the anode main body portion 111. The cathode tab 212 led out from the cathode main body portion 211 may extend continuously in a length direction of the cathode plate 2, or may be of a sawtooth structure. The cathode plate 2 may be arranged at an end of the cathode main body portion 211 in the second direction y, and be led out in the second direction y. For example, the cathode current collector 21 may be made of aluminum, and the cathode active material layer 22 may be made of lithium cobalt oxide, lithium iron phosphate, ternary lithium, lithium manganate, etc., and may be attached to the cathode current collector 21 by coating, spraying or other means.

The reinforcement layer 13 may be provided on the anode current collector 11 alone, or on the cathode current collector 21 alone, or on both the anode current collector 11 and the cathode current collector 21. The reinforcement layer 13 provided on the anode current collector 11 may be provided on the anode main body portion 111, and the reinforcement layer 13 provided on the cathode current collector 21 may be provided on the cathode main body portion 211.

The reinforcement layer 13 is configured to increase the strength of the end of the anode current collector 11 or the cathode current collector 21 in the second direction y that is close to the anode tab 112, to reduce the amount of deformation of the anode current collector 11, thereby reducing the anode active material layer 12 damaged or shed. The reinforcement layer 13 provided on the anode current collector 11 is configured to increase the self-strength of the end of the anode main body portion 111 close to the anode tab 112 to reduce the amount of deformation of the anode current collector 11. The reinforcement layer 13 provided on the cathode current collector 21 is configured to provide a stable supporting force to protect the anode current collector 11 and reduce the amount of deformation by increasing the self-strength of the end of the cathode main body portion 211 close to the anode tab 112.

In this embodiment, since at least one of the anode current collector 11 and the cathode current collector 21 is provided with the reinforcement layer 13 on the lead-out side of the anode tab 112, the strength of the anode plate 1 and/or the cathode plate 2 on the lead-out side of the anode tab 112 can be improved. In this way, when the electrode assembly 100 is vibrated up and down by external force, the amount of deformation of the end of the anode main body portion 111 close to the anode tab 112 can be reduced, and the anode main body portion 111 can be prevented from being bent by pressure, thereby reducing damage to or shedding of the anode active material layer 12. When lithium ions in the anode plate 1 diffuse to two sides during a cycle of the battery cell 200, the lithium ions can be prevented from precipitating in the area where the anode active material layer 12 is located, improving the safety of the battery cell 200 during use.

In some embodiments, the anode tab 112 is led out in a second direction y relative to the anode main body portion 111. The second direction y is perpendicular to the first direction x. In the second direction y, the reinforcement layer 13 extends beyond the anode active material layer 12.

In the second direction y, an outer end of the reinforcement layer 13 close to the anode tab 112 extends beyond an outer end of the anode active material layer 12 close to the anode tab 112.

As shown in FIG. 6, as the reinforcement layer 13 provided on the anode current collector 11, at least part of the reinforcement layer 13 is provided on the anode main body portion 111 and is located at the outer end of the anode active material layer 12 in the second direction y, to increase the self-strength of the end of the anode main body portion 111 close to the anode tab 112. When the electrode assembly 100 is vibrated in the second direction y, even if the vibration acting force is transmitted to the end of the anode main body portion 111, the amount of deformation can be reduced due to the increase in the strength of the end of the anode main body portion 111, and the reinforcement layer 13 first withstand the acting force transmitted by the anode tab 112, to prevent the anode main body portion 111 from being deformed, which causes the anode active material layer 12 to be damaged or shed.

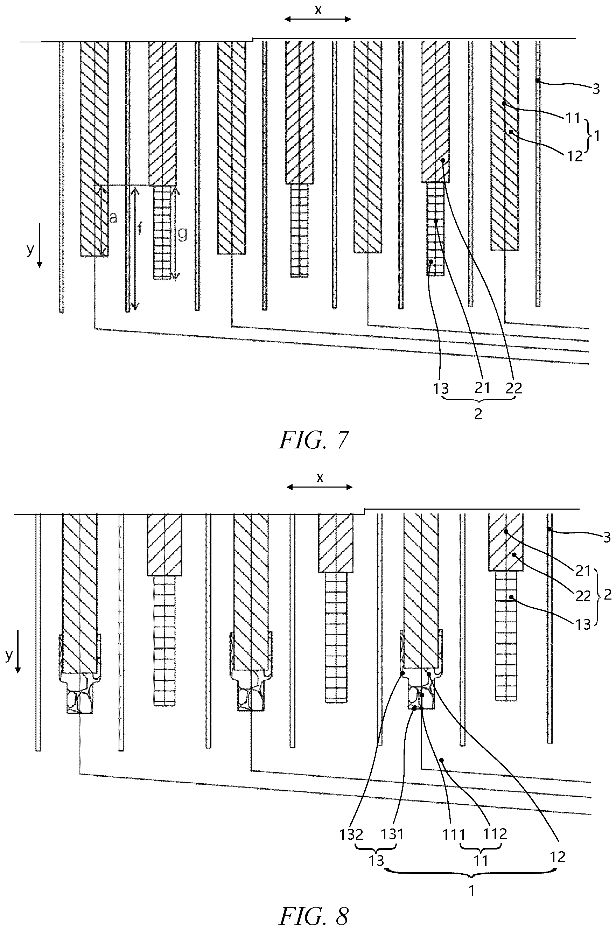

As shown in FIG. 7, as the reinforcement layer 13 provided on the cathode current collector 21, in the second direction y, the outer end of the reinforcement layer 13 close to the anode tab 112 extends beyond the outer end of the anode active material layer 12 close to the anode tab 112, so that when the electrode assembly 100 is vibrated in the second direction y, the reinforcement layer 13 extending beyond the anode active material layer 12 can form a stable support structure, such that the reinforcement layer 13 first withstands the acting force transmitted by the anode tab to prevent the vibration from being transmitted to the end of the anode main body portion 111, preventing the anode main body portion 111 from being deformed, which causes the anode active material layer 12 to be damaged or shed. Optionally, the reinforcement layer 13 provided on the cathode current collector 21 may not extend beyond the anode active material layer 12, and the length of a cantilevered portion of the anode main body portion 111 can also be shortened, thereby providing the effect of reducing the deformation of the end of anode main body portion 111 to a certain extent.

In this embodiment, the reinforcement layer 13 extends beyond the anode active material layer 12 in the second direction y, so that when the electrode assembly 100 is vibrated up and down by external force, the reinforcement layer 13 can first withstand the acting force transmitted by the anode tab 112 to protect a part of the anode active material layer 12 close to the anode tab 112, thereby reducing the amount of deformation of the end of the anode main body portion 111 close to the anode tab 112, preventing the anode main body portion 111 from being bent by pressure, reducing damage to or shedding of the anode active material layer 12, and improving the safety of the battery cell 200 during operation.

In some embodiments, at least part of a surface of the cathode current collector 21 is provided with a cathode active material layer 22; and the reinforcement layer 13 provided on the anode current collector 11 is connected to the anode active material layer 12, and/or the reinforcement layer 13 provided on the cathode current collector 21 is connected to the cathode active material layer 22.

The term "connection" means that the reinforcement layer 13 and the active material layer have parts in contact with each other, so that the reinforcement layer 13 and the active material layer form an integral layered structure. The active material layer may be the anode active material layer 12 or the cathode active material layer 22. For example, the reinforcement layer 13 is connected to an end surface of the anode active material layer 12 or the cathode active material layer 22 in the second direction y; and/or the reinforcement layer 13 is connected to a side surface of the anode active material layer 12 or the cathode active material layer 22 in the first direction x. Optionally, in order to realize the connection between the reinforcement layer 13 and the active material layer, when coating or spraying, the reinforcement layer 13 may be in contact with an edge of the active material layer, or cover the edge of the active material layer.

In this embodiment, the reinforcement layer 13 is connected to the active material layer so that the reinforcement layer 13 and the active material layer form an integral structure, and the strength of the end of the anode current collector 11 or the cathode current collector 21 close to the anode tab 112 can be increased, improving the reinforcement effect. The active material layer may be the anode active material layer 12 or the cathode active material layer 22. Optionally, a preset gap may also be retained between the reinforcement layer 13 and the active material layer, so that the reinforcement layer 13 and the active material layer are separate from each other.

In some embodiments, the anode tab 112 is led out in a second direction y relative to the anode main body portion 111. The second direction y is perpendicular to the first direction x. In the second direction y, the reinforcement layer 13 does not extend beyond an edge of a free end of the anode tab 112.

As shown in FIG. 6, in the second direction y, the reinforcement layer 13 provided on the anode current collector 11 does not extend beyond the edge of the anode current collector 11, that is, the reinforcement layer 13 does not extend beyond the edge of the free end of the anode tab 112, so that the uncoated part of the anode current collector 11 located on the outer side of the reinforcement layer 13 in the second direction y forms the anode tab 112. The free end of the anode tab 112 refers to the end of the anode tab 112 away from the anode main body portion 111 in the second direction y.

As shown in FIG. 7, in the second direction y, the reinforcement layer 13 provided on the cathode current collector 21 does not extend beyond the edge of the anode current collector 11, that is, the reinforcement layer 13 does not extend beyond the edge of the anode tab 112, so that a length for bending the anode tab 112 is left in the second direction y, so as to perform a flattening process when welding the anode tab to the anode connector 230.

In this embodiment, the reinforcement layer 13 does not extend beyond the edge of the free end of the anode tab 112 in the second direction y, so that it is possible to not only leave enough electrical connection length for the anode tab 112, but also leave a length for bending the anode tab 112, so as to perform a flattening process when welding the anode tab to the anode connector 230. In this way, the reliability of the electrical connection between the anode tab 112 and the anode connector 230 can be ensured, thereby reducing the influence of the reinforcement layer 13 on the operation performance of the battery cell 200. Moreover, it is also possible to avoid increasing the height of the electrode assembly 100 due to the provision of the reinforcement layer 13, and ensure that the capacity of the battery cell 200 is not affected.

In some embodiments, the electrode assembly 100 further comprises a separator 3. The separator 3 is configured to separate the anode plate 1 from the cathode plate 2, the anode tab 112 is led out in a second direction y relative to the anode main body portion 111, the second direction y being perpendicular to the first direction x, and at least part of a surface of the cathode current collector 21 is provided with a cathode active material layer 22. In the second direction y, an edge of the separator 3 extends beyond an edge of the anode active material layer 12 and an edge of the cathode active material layer 22, and the reinforcement layer 13 does not extend beyond an edge of the separator 3 that is located on an anode side of the electrode assembly 100.

The separator 3 may be a separator film, and after the wound structure is flattened, the separator 3 may be an elongated strip structure. For example, the separator 3 comprises a separator film base layer and a functional layer. The separator film base layer may be at least one of polypropylene, polyethylene, an ethylene-propylene copolymer, polybutylene terephthalate, etc., and the functional layer may be a mixture layer of ceramic oxide and a binder.

As shown in FIG. 6, in the second direction y, a distance by which the reinforcement layer 13 extends beyond the end surface of the anode active material layer 12 is defined as c, and a distance between the end surface of the anode active material layer 12 and the edge of the separator 3 is defined as e, where c < e.

In this embodiment, by making the reinforcement layer 13 not extend beyond the edge of the separator 3 that is located on the anode side of the electrode assembly 100, further, sufficient electrical connection length is left for the anode tab 112 and a length for bending the anode tab 112 is left, so as to perform a flattening process when welding the anode tab to the anode connector 230. In this way, the reliability of the electrical connection between the anode tab 112 and the anode connector 230 can be ensured, thereby reducing the influence of the reinforcement layer 13 on the operation performance of the battery cell 200. Moreover, it is also possible to avoid increasing the height of the electrode assembly 100 due to the provision of the reinforcement layer 13, and ensure that the capacity of the battery cell 200 is not affected.

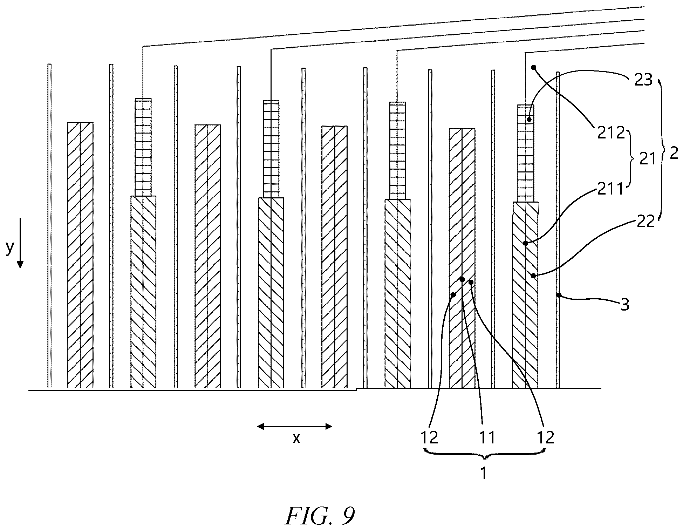

In some embodiments, as shown in FIG. 9, the cathode current collector 21 comprises a cathode main body portion 211 and a cathode tab 212 led out from the cathode main body portion 211, and the anode tab 112 and the cathode tab 212 are led out in opposite directions.

For example, in the second direction y, the anode tab 112 and the cathode tab 212 may be respectively led out from two ends of the electrode main body 100'. For a cylindrical battery cell 200, the end of the battery cell 200 has a small area. If two electrode terminals 222 with opposite polarities are provided at the same end, and a pressure relief component or other electrical connection components need to be provided, the layout will be difficult. With the anode tab 112 and the cathode tab 212 being led out in opposite directions, the internal structural complexity of the battery cell 200 can be reduced and the layout is easy.

In this embodiment, the anode tab 112 and the cathode tab 212 are led out in opposite directions, so that if a reinforcement layer 13 is provided on the anode current collector 11, the influence of protrusions or unevenness of the reinforcement layer 13 in the first direction x on the cathode tab 212 and the cathode active material layer 22 can be avoided, so as to prevent the reinforcement layer 13 from affecting the performance of the battery cell 200, allowing the thickness of the reinforcement layer 13 to be increased, and reducing the requirements for the dimensional accuracy of the reinforcement layer 13. If a reinforcement layer 13 is provided on the cathode current collector 21, since the cathode tab 212 is arranged on the side away from the anode tab 112, the reinforcement layer 13 can be provided by extending the width of the cathode current collector 21 in the second direction y, so as to improve support for the end of the anode main body portion 111. Therefore, such a structure makes it easier to provide a reinforcement layer 13 and can achieve a better effect of deforming the end of the anode main body portion 111.

In some embodiments, at least part of a surface of the cathode current collector 21 is provided with a cathode active material layer 22; and the anode current collector 11 is provided with the reinforcement layer 13 at least on a side where the anode active material layer 12 is provided, and/or the cathode current collector 21 is provided with the reinforcement layer 13 at least on a side where the cathode active material layer 22 is provided.

For example, in the first direction x, the anode current collector 11 is provided with the anode active material layer 12 on a single side, the reinforcement layer 13 is provided at least on the side of the anode current collector 11 provided with the anode active material layer 12, and the side of the anode current collector 11 provided with no anode active material layer 12 may be optionally provided with a reinforcement layer 13. The cathode current collector 21 is provided with the cathode active material layer 22 on a single side, the reinforcement layer 13 is provided at least on the side of the cathode current collector 21 provided with the cathode active material layer 22, and the side of the cathode current collector 21 provided with no cathode active material layer 22 may be optionally provided with a reinforcement layer 13.

For example, the anode current collector 11 is provided with anode active material layers 12 on two sides, and reinforcement layers 13 may also be provided on the two sides of the anode current collector 11 to achieve a better strength increasing effect, or the reinforcement layer 13 may be optionally provided on either side of the anode current collector 11. The cathode current collector 21 is provided with cathode active material layers 22 on two sides, and reinforcement layers 13 may also be provided on the two sides of the cathode current collector 21 to achieve a better strength increasing effect, or the reinforcement layer 13 may be optionally provided on either side of the cathode current collector 21.

Optionally, in the first direction x, the reinforcement layer 13 and the active material layer may also be located on different sides of the current collector. The current collector may refer to the anode current collector 11 or the cathode current collector 21. The active material layer refers to the anode active material layer 12 provided on the anode current collector 11 or the cathode active material layer 22 provided on the cathode current collector 21.

In this embodiment, a reinforcement layer 13 is provided at least on the side of the current collector that is provided with the active material layer, so that the connection between the reinforcement layer 13 and the active material layer is facilitated, and it is possible to strengthen the effect of increasing the strength of the end of the current collector, prevent the active material layer from shedding due to the deformation of the current collector, and easily protect the edge of the active material layer to prevent the active material layer from shedding after long-term use of the battery cell 200.

In some embodiments, the anode tab 112 is led out in a second direction y relative to the anode main body portion 111, the second direction y being perpendicular to the first direction x, and at least part of a surface of the cathode current collector 21 is provided with a cathode active material layer 22; and in the second direction y, the anode active material layer 12 extends beyond the cathode active material layer 22.

In this embodiment, during the use of the electrode assembly 100, the lithium ions in the area where the cathode active material layer 22 of the cathode plate 2 is located pass through the separator 3 and are intercalated in the anode active material layer 12 of an adjacent anode plate 1. Since the anode active material layer 12 extends beyond the cathode active material layer 22, it is possible to ensure that the lithium ions are intercalated in the anode active material layer 12 as much as possible, reducing the risk of lithium precipitation, while also enabling the cathode active material layer 22 to fully function.

In some embodiments, the strength of the reinforcement layer 13 exceeds that of the anode active material layer 12.

The term "strength" here mainly refers to the cohesive strength of a coating structure, that is, the strength of the coating structure itself. The strength is related to the chemical composition of the coating, the residual stress in the coating, the size of grains in the coating, the porosity of the coating, the uniformity of the coating structure and other factors., and its unit is Pascal, i.e. Pa. In practice, the cohesive strength of the coating structure can be measured in any manner known in the art.

In this embodiment, the strength of the end of the anode current collector 11 or the cathode current collector 21 can be improved by increasing the strength of the reinforcement layer 13 itself. On the basis of meeting the strength requirements, the thickness of the reinforcement layer 13 can be minimized to prevent same from affecting the adjacent plate, so as to prevent the provision of the reinforcement layer 13 from affecting the weight of the electrode assembly 100, and the weight added to the electrode assembly 100 can be minimized.

In some embodiments, the material of the reinforcement layer 13 comprises an adhesive and ceramic particles.

The adhesive may include at least one of epoxy resin, acrylate, styrenebutadiene rubber, polytetrafluoroethylene and polyvinylidene fluoride. The ceramic particles may include at least one of boehmite, aluminum oxide, silicon oxide and zirconium oxide. Optionally, the reinforcement layer 13 may also contain a small amount of color identifying agent, such as conductive carbon or Prussian blue. The thickness of the reinforcement layer 13 after drying may be 0.01 mm to 0.1 mm. The reinforcement layer 13 should have good toughness and strength to prevent same from shedding after winding and bending.

In this embodiment, the reinforcement layer 13 is formed by the adhesive and the ceramic particles. The adhesive can provide better adhesion between the reinforcement layer 13 and the current collector or the active material layer, preventing the reinforcement layer 13 from shedding. Due to their high hardness, the ceramic particles can increase the strength by being mixed into the adhesive.

In the first embodiment, as shown in FIG. 6, the reinforcement layer 13 is provided on the anode current collector 11, the reinforcement layer 13 comprises a first reinforcement section 131, and the first reinforcement section 131 is in contact with a surface of the anode current collector 11.

The first reinforcement section 131 is directly attached to the anode current collector 11, and specifically may be provided on the anode main body portion 111. In the second direction y, the first reinforcement section 131 may be located between the anode active material layer 12 and the anode tab 112, and the first reinforcement section 131 is connected to the anode active material layer 12 in the second direction y.

In this embodiment, by attaching the first reinforcement section 131 directly to the anode current collector 11 at the outer end of the anode active material layer 12, the strength of the anode current collector 11 in the region of the outer end of the anode active material layer 12 can be increased. When the electrode assembly 100 is vibrated in the second direction y, the vibration acting force will first act on the first reinforcement section 131, thereby protecting the anode active material layer 12. Moreover, by increasing the strength of the end of the anode current collector 11, the amount of deformation of the anode current collector 11 can be reduced, thereby preventing the anode active material layer 12 from being damaged or shed, improving the operation safety of the battery cell 200.

In some embodiments, as shown in FIG. 6, the reinforcement layer 13 further comprises a second reinforcement section 132, the second reinforcement section 132 is connected to the first reinforcement section 131, and the second reinforcement section 132 covers an edge area of the anode active material layer 12, such that the second reinforcement section 132 is provided on the anode current collector 11 by means of the anode active material layer 12.

The second reinforcement section 132 and the first reinforcement section 131 may be formed integrally. In the first direction x, the thickness of the second reinforcement section 132 may be smaller than that of the first reinforcement section 131. Since the second reinforcement section 132 covers the edge area of the anode active material layer 12, designing the second reinforcement section with a thinner thickness can reduce the influence on the separator 3 and the adjacent cathode plate 2. In addition, since the second reinforcement section 132 is in direct contact with the separator 3, the second reinforcement section 132 can be designed as a layered structure with a uniform thickness.

In this embodiment, the dimension of the reinforcement layer 13 in the second direction y can be increased by providing both the first reinforcement section 131 and the second reinforcement section 132, so as to improve the strength of the end of the anode main body portion 111 as much as possible, and reduce the amount of deformation of the end of the anode main body portion 111. Moreover, the first reinforcement section 131 is located at the end of the anode active material layer 12 in the second direction y, so that when the electrode assembly 100 is vibrated in the second direction y, the vibration acting force will first act on the first reinforcement section 131 and does not directly act on the anode active material layer 12, and the second reinforcement section 132 can protect the outer side of the anode active material layer 12 in the first direction x, and can form a position-limiting constraint on the anode active material layer 12 to prevent the anode active material layer 12 from shedding due to arching. Since the first reinforcement section 131 and the second reinforcement section 132 completely surround the end of the anode active material layer 12 close to the anode tab 112, the strength increasing effect can be optimized, and the safety of the electrode assembly 100 during operation can be greatly improved.

In some embodiments, as shown in FIG. 6, in the first direction x, an outer surface of the first reinforcement section 131 does not protrude from an outer surface of the second reinforcement section 132.

In this embodiment, considering that the second reinforcement section 132 is provided on the outer surface of the anode active material layer 12 and has a larger thickness, while the anode tab 112 is an empty foil area with a smaller thickness, the outer surface of the first reinforcement section 131 does not protrude from the outer surface of the second reinforcement section 132, so that it is possible to achieve thickness transition and reduce stress concentration.

In some embodiments, as shown in FIG. 6, the anode tab 112 is led out in a second direction y relative to the anode main body portion 111, the second direction y being perpendicular to the first direction x, and at least part of a surface of the cathode current collector 21 is provided with a cathode active material layer 22; and in the second direction y, a width dimension b of the second reinforcement section 132 does not exceed a third distance a, the third distance a being a distance in the second direction y between an edge of the cathode active material layer 22 that is located on an anode side of the electrode assembly 100 and an edge of the anode active material layer 12 that is located on the anode side of the electrode assembly 100.

In some embodiments, b ≤ a. In order to achieve a better effect, b ≤ 0.8a. This is because when b > a, the lithium ions deintercalated from the cathode plate 2 during charging will bypass the reinforcement layer 13 and are precipitated at an interface between the anode active material layer 12 and the second reinforcement section 132. The lithium precipitation will cause rapid attenuation of the capacity and even cause safety issues. Optionally, a is between 0.3 mm to 3 mm, and b is between 0 to 1.5 mm.

In this embodiment, it is possible that the lithium ions deintercalated from the cathode plate 2 directly reach the anode active material layer 12 during charging, so as to prevent the reinforcement layer 13 from affecting the movement of the lithium ions to the anode active material layer 12 for attachment, and prevent the occurrence of lithium precipitation which causes rapid attenuation of the capacity of the battery cell 200, thus ensuring the performance of the battery cell 200 and improving the safety of use.

In some embodiments, two sides of the anode current collector 11 in the first direction x are each provided with the anode active material layers 12, and an outer side of the anode active material layer 12 on each side is provided with the second reinforcement section 132, a first distance d1 between outer surfaces of the anode active material layers 12 on the two sides and a second distance d2 between outer surfaces of the second reinforcement sections 132 on the two sides satisfy the following relationship: d1 ≤ d2 ≤ 1.3*d1.

In order to achieve a better effect, d1 ≤ d2 ≤ 1.1*d1. When d2 > 1.3*d1, the total thickness of the reinforcement layer 13 provided in the anode plate 1 far exceeds the thickness of the main body area of the anode plate 1. This will cause the anode plate 1 to be transferred in the form of a roll during the production process and cause an edge of the roll to bulge during the production process, resulting in cracking of the anode plate 1.

In this embodiment, it is possible that by providing second reinforcement sections 132 on the outer sides of the anode active material layers 12 on two sides, the anode active material layers 12 on the two sides can be protected, improving the strength of the end of the anode main body portion 111. Moreover, by making the first distance d1 and the second distance d2 satisfy the above relationship, and matching the thickness of the reinforcement layer 13 with the thickness of the main body area of the anode plate 1, the thickness of the reinforcement layer 13 can not only meet the requirements for increasing the strength, but can also prevent the reinforcement layer 13 from being too thick, which causes the separator 3 to bulge too much and even affects the adjacent cathode plate 2, thereby ensuring the performance of the electrode assembly 100. In addition, it is possible to prevent the anode plate 1 from being transferred in the form of a roll during the production process and prevent an edge of the roll from bulging during the production process, to avoid cracking of the anode plate 1.

In the second embodiment, as shown in FIG. 7, the reinforcement layer 13 is provided on the cathode current collector 21, and the reinforcement layer 13 is entirely in contact with the surface of the cathode current collector 21.

The reinforcement layer 13 may be a layered structure with a uniform thickness. The reinforcement layer 13 may extend beyond the end of the anode active material layer 12 in the second direction y but does not extend beyond the end of the separator 3.

As shown in FIG. 7, in the second direction y, a distance between the end surface of the cathode active material layer 22 and the end surface of the reinforcement layer 13 is defined as g, a distance between the end surface of the cathode active material layer 22 and the end surface of the separator 3 is defined as f, and a distance between the end surface of the anode active material layer 12 and the cathode active material layer 22 is defined as a, where g, a and f satisfy the following relationship: a ≤ g ≤ f. When g < a, the protective effect of the reinforcement layer 13 on the anode active material layer 12 is small. When g > f, the capacity of the battery cell 200 will be affected.

In this embodiment, by attaching the reinforcement layer 13 directly to the cathode current collector 21 at an outer end of the cathode active material layer 22, the strength of the cathode current collector 21 in the region of the outer end of the cathode active material layer 22 can be increased. When the reinforcement layer 13 extends beyond the end of the anode active material layer 12 in the second direction y, a stable support effect can be formed. When the electrode assembly 100 is vibrated in the second direction y, the vibration acting force will first act on the reinforcement layer 13, and the reinforcement layer 13 will withstand the vibration acting force, thereby preventing the end of the anode current collector 11 close to the anode tab 112 from being deformed, to protect the anode active material layer 12, thereby preventing the anode active material layer 12 from being damaged or shed, and improving the operation safety of the battery cell 200.

In some embodiments, at least part of the surface of the cathode current collector 21 is provided with a cathode active material layer 22; and in the first direction x, an outer surface of the reinforcement layer 13 does not protrude from an outer surface of the cathode active material layer 22.

In this embodiment, considering that in order to avoid the lithium precipitation, the anode active material layer 12 extends beyond the cathode active material layer 22 in the second direction y, so that the reinforcement layer 13 and the anode active material layer 12 are arranged adjacent to each other, and separated only by the separator 3 therebetween, and the outer surface of the reinforcement layer 13 does not protrude from the outer surface of the cathode active material layer 22. It is possible to prevent the reinforcement layer 13 from exerting an acting force on the anode active material layer 12, prevent the anode current collector 11 and the cathode current collector 21 from being bent, which causes the shedding of the active material, and improve the operation safety of the battery cell 200.

In some embodiments, as shown in FIG. 8, the anode current collector 11 and the cathode current collector 21 are each provided with a reinforcement layer 13 on the lead-out side of the anode tab 112, the anode tab 112 is led out along a second direction y relative to the anode main body portion 111, the second direction y being perpendicular to the first direction x, and in the second direction y, the reinforcement layer 13 provided on the anode current collector 11 extends beyond the reinforcement layer 13 provided on the cathode current collector 21.

The specific structure of the anode current collector 11 provided with the reinforcement layer 13 and the specific structure of the cathode current collector 21 provided with the reinforcement layer 13 can refer to the description of the above embodiments.

In this embodiment, by providing a reinforcement layer 13 in the area of each of the anode current collector 11 and the cathode current collector 21 close to the anode tab 112, it is possible to improve the self-strength of the end of the anode main body portion 111 close to the anode tab 112. When the electrode assembly 100 is vibrated in the second direction y, even if the vibration acting force is transmitted to the end of the anode main body portion 111, the amount of deformation can be reduced due to the increase in the strength of the end of the anode main body portion 111, thereby reducing damage to or shedding of the anode active material layer 12. Moreover, the reinforcement layer 13 extending beyond the anode active material layer 12 can form a stable support structure. When the electrode assembly 100 is vibrated in the second direction y, the reinforcement layer 13 extending beyond the anode active material layer 12 can form a stable support structure to prevent the vibration from being transmitted to the end of the anode main body portion 111, preventing the anode main body portion 111 from being deformed, which causes the anode active material layer 12 to be damaged or shed. Therefore, such a structure can maximize the operation safety of the battery cell 200.

Moreover, in the second direction y, the reinforcement layer 13 provided on the anode current collector 11 extends beyond the reinforcement layer 13 provided on the cathode current collector 21, so that when the electrode assembly 100 is vibrated in the second direction y, the reinforcement layer 13 provided on the anode current collector 11 can be used to withstand the vibration acting force first, so as to directly protect the end of the anode main body portion 111. When the vibration force is large, the reinforcement layer 13 provided on the cathode current collector 21 can then be used to provide support, to improve the compressive strength requirements of the electrode assembly 100.

Some specific embodiments of the electrode assembly 100 are given below.

As shown in FIGS. 5 to 9, the cylindrical electrode assembly 100 comprises an electrode main body 100', an anode tab 112 and a cathode tab 212. The anode tab 112 and the cathode tab 212 are respectively led out from two ends of the electrode main body 100'. The anode plate 1 and the cathode plate 2 are alternately arranged at intervals in a multilayer manner in the first direction x, and the anode plate 1 and the cathode plate 2 are separated by a separator 3.

The anode plate 1 comprises an anode current collector 11 and an anode active material layer 12. The anode current collector 11 comprises an anode main body portion 111 and an anode tab 112 led out from the anode main body portion 111, and the anode active material layer 12 is provided on at least part of a surface of the anode main body portion 111.

The cathode plate 2 comprises a cathode current collector 21 and a cathode active material layer 22. The cathode current collector 21 comprises a cathode main body portion 211 and a cathode tab 212 led out from the cathode main body portion 211, and the cathode active material layer 22 is provided on at least part of a surface of the cathode main body portion 211.

As shown in FIGS. 6 to 8, in the second direction y, a distance by which the anode active material layer 12 extends beyond the cathode active material layer 22 is defined as a. When the electrode assembly 100 is vibrated in the second direction y, the vibration will be directly transmitted to the end of each of the anode main body portion 111 and the anode active material layer 12 close to the anode tab 112 through the anode connector 230. This may cause the anode main body portion 111 to be bent and cause the anode active material layer 12 to be shed. For this reason, at least one of the anode main body portion 111 and the cathode main body portion 211 is provided, at an end close to the anode tab 112, with a reinforcement layer 13.

In the first embodiment, as shown in FIG. 6, the reinforcement layer 13 is provided on the anode current collector 11, specifically at the end of the anode main body portion 111 close to the anode tab 112. Anode active material layers 12 are provided on two sides of the anode main body portion 111 in the first direction x. For this reason, reinforcement layers 13 are provided on the two sides of the anode main body portion 111 in the first direction x. In the second direction y, the end surface of the reinforcement layer 13 does not extend beyond the edge of the separator 3, and the uncoated area outside the reinforcement layer 13 forms the anode tab 112. In the direction opposite to the second direction y, the reinforcement layer 13 does not extend beyond the end surface of the cathode active material layer 22. The reinforcement layer 13 on each side of the anode current collector 11 comprises a first reinforcement section 131 and a second reinforcement section 132 that are connected to each other. The first reinforcement section 131 is directly provided on the anode main body portion 111 and is connected to the anode active material layer 12 in the second direction y. The second reinforcement section 132 covers the edge area of the outer surface of the anode active material layer 12, the first reinforcement section 131 and the second reinforcement section 132 are provided with a tapered structure at the connection, and the tapered structure is located on the outer side of the end of the anode active material layer 12 in the second direction y, so that the outer surface of the first reinforcement section 131 is lower than the second reinforcement section 132 in the first direction x.

For the electrode assembly 100 of a wound structure, the anode plate 1 is entirely provided with a reinforcement layer 13 in the winding length direction. For the electrode assembly 100 of a laminated structure, each anode plate 1 is provided with a reinforcement layer 13.

In the second embodiment, as shown in FIG. 7, the reinforcement layer 13 is provided on the cathode current collector 21, specifically at the end of the cathode main body portion 212 close to the cathode tab 212. Cathode active material layers 22 are provided on two sides of the cathode main body portion 211 in the first direction x. For this reason, reinforcement layers 13 are provided on the two sides of the cathode main body portion 211 in the first direction x. In the second direction y, the end surface of the reinforcement layer 13 extends beyond the end surface of the anode active material layer 12 but does not extend beyond the edge of the separator 3. In the first direction x, the outer surface of the reinforcement layer 13 is lower than the outer surface of the cathode active material layer 22.

In the third embodiment, as shown in FIG. 8, the anode current collector 11 and the cathode current collector 21 are each provided with a reinforcement layer 13. The arrangement of the reinforcement layer 13 on each current collector may refer to the first embodiment and the second embodiment. For example, in the second direction y, the end surface of the reinforcement layer 13 of the anode current collector 11 may extend beyond the end surface of the reinforcement layer 13 of the cathode current collector 21. Alternatively, the end surface of the reinforcement layer 13 of the cathode current collector 21 may extend beyond the end surface of the reinforcement layer 13 of the anode current collector 11, or the two end surfaces are flush with each other.

FIG. 9 illustrates a schematic structural diagram of the electrode assembly 100 on the cathode tab 212 side. This arrangement is also applicable to any of the above embodiments. In the second direction y, an insulating layer 23 is provided at the end of the cathode current collector 21 close to the cathode tab 212. Specifically, the insulating layer 23 is provided on the surface of the cathode main body portion 211 and is located between the cathode active material layer 22 and the cathode tab 212 in the second direction y.

Optionally, in the second direction y, the end surface of the anode active material layer 12 extends beyond the end surface of the cathode active material layer 22, the insulating layer 23 is connected to the cathode active material layer 22, and an end surface of the insulating layer 23 extends beyond the anode active material layer 12.

Optionally, in the second direction y, the end surface of the insulating layer 23 does not extend beyond the edge of the separator 3, so as to leave sufficient electrical connection length for the cathode tab 212 and reduce the influence on the capacity of the battery cell 200.

Optionally, the cathode current collector 21 is provided with cathode active material layers 22 on two sides in the first direction x. Correspondingly, the cathode current collector 21 is also provided with insulating layers 23 on the two sides in the first direction x.

For example, the insulating material comprises an inorganic filler and an adhesive. The inorganic filler includes one or more of boehmite, aluminum oxide, magnesium oxide, titanium oxide, zirconium oxide, silicon dioxide, silicon carbide, boron carbide, calcium carbonate, aluminum silicate, calcium silicate, potassium titanate, and barium sulfate. The binder includes one or more of polyvinylidene fluoride, polyacrylonitrile, polyacrylic acid, polyacrylate, polyacrylic acid-acrylate, polyacrylonitrile-acrylic acid, and polyacrylonitrile-acrylate.

In this embodiment, the insulating layer 23 is provided on the cathode main body portion 211, and the end of the anode active material layer 12 close to the cathode tab 212 in the second direction y is located in the area where the insulating layer 23 is located, so that the risk of a short circuit between the anode plate 1 and the cathode plate 2 after metal chips penetrate the separator 3 can be reduced while satisfying that the anode active material layer 12 extends beyond the adjacent cathode active material layer 22 in the direction opposite to the second direction y.

Although the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. An electrode assembly (100), comprising:
an anode plate (1), comprising an anode current collector (11) and an anode active material layer (12), wherein the anode current collector (11) comprises an anode main body portion (111) and an anode tab (112) led out from the anode main body portion (111), and the anode active material layer (12) is provided on at least part of a surface of the anode main body portion (111);
a cathode plate (2) configured to be stacked with the anode plate (1) in a first direction (x), the cathode plate (2) comprising a cathode current collector (21);
wherein at least one of the anode current collector (11) and the cathode current collector (21) is provided with a reinforcement layer (13) on a lead-out side of the anode tab (112).

2. The electrode assembly (100) according to claim 1, wherein the anode tab (112) is led out in a second direction (y) relative to the anode main body portion (111), the second direction (y) being perpendicular to the first direction (x); and in the second direction (y), the reinforcement layer (13) extends beyond the anode active material layer (12).

3. The electrode assembly (100) according to claim 1 or 2, wherein at least part of a surface of the cathode current collector (21) is provided with a cathode active material layer (22); and
the reinforcement layer (13) provided on the anode current collector (11) is connected to the anode active material layer (12), and/or the reinforcement layer (13) provided on the cathode current collector (21) is connected to the cathode active material layer (22).

4. The electrode assembly (100) according to any one of claims 1 to 3, wherein the anode tab (112) is led out in a second direction (y) relative to the anode main body portion (111), the second direction (y) being perpendicular to the first direction (x); and in the second direction (y), the reinforcement layer (13) does not extend beyond an edge of a free end of the anode tab (112).

5. The electrode assembly (100) according to any one of claims 1 to 4, further comprising a separator (3), wherein the separator (3) is configured to separate the anode plate (1) from the cathode plate (2), the anode tab (112) is led out in a second direction (y) relative to the anode main body portion (111), the second direction (y) being perpendicular to the first direction (x), and at least part of a surface of the cathode current collector (21) is provided with a cathode active material layer (22); and
in the second direction (y), an edge of the separator (3) extends beyond an edge of the anode active material layer (12) and an edge of the cathode active material layer (22), and the reinforcement layer (13) does not extend beyond an edge of the separator (3) that is located on an anode side of the electrode assembly (100).

6. The electrode assembly (100) according to any one of claims 1 to 5, wherein the cathode current collector (21) comprises a cathode main body portion (211) and a cathode tab (212) led out from the cathode main body portion (211), and the anode tab (112) and the cathode tab (212) are led out in opposite directions.

7. The electrode assembly (100) according to any one of claims 1 to 6, wherein at least part of a surface of the cathode current collector (21) is provided with a cathode active material layer (22); and
the anode current collector (11) is provided with the reinforcement layer (13) at least on a side where the anode active material layer (12) is provided, and/or the cathode current collector (21) is provided with the reinforcement layer (13) at least on a side where the cathode active material layer (22) is provided.

8. The electrode assembly (100) according to any one of claims 1 to 7, wherein the anode tab (112) is led out in a second direction (y) relative to the anode main body portion (111), the second direction (y) being perpendicular to the first direction (x), and at least part of a surface of the cathode current collector (21) is provided with a cathode active material layer (22); and in the second direction (y), the anode active material layer (12) extends beyond the cathode active material layer (22).

9. The electrode assembly (100) according to any one of claims 1 to 8, wherein the strength of the reinforcement layer (13) exceeds that of the anode active material layer (12).

10. The electrode assembly (100) according to any one of claims 1 to 9, wherein the material of the reinforcement layer (13) comprises an adhesive and ceramic particles.

11. The electrode assembly (100) according to any one of claims 1 to 10, wherein the reinforcement layer (13) is provided on the anode current collector (11), the reinforcement layer (13) comprises a first reinforcement section (131), and the first reinforcement section (131) is in contact with a surface of the anode current collector (11).

12. The electrode assembly (100) according to claim 11, wherein the reinforcement layer (13) further comprises a second reinforcement section (132), the second reinforcement section (132) is connected to the first reinforcement section (131), and the second reinforcement section (132) covers an edge area of the anode active material layer (12).

13. The electrode assembly (100) according to claim 12, wherein in the first direction (x), an outer surface of the first reinforcement section (131) does not protrude from an outer surface of the second reinforcement section (132).

14. The electrode assembly (100) according to claim 12 or 13, wherein the anode tab (112) is led out in a second direction (y) relative to the anode main body portion (111), the second direction (y) being perpendicular to the first direction (x), and at least part of a surface of the cathode current collector (21) is provided with a cathode active material layer (22); and in the second direction (y), a width dimension b of the second reinforcement section (132) does not exceed a third distance a, the third distance a being a distance in the second direction (y) between an edge of the cathode active material layer (22) that is located on an anode side of the electrode assembly (100) and an edge of the anode active material layer (12) that is located on the anode side of the electrode assembly (100).

15. The electrode assembly (100) according to any one of claims 12 to 14, wherein two sides of the anode current collector (11) in the first direction (x) are each provided with the anode active material layers (12), and an outer side of the anode active material layer (12) on each side is provided with the second reinforcement section (132), a first distance d1 between outer surfaces of the anode active material layers (12) on the two sides and a second distance d2 between outer surfaces of the second reinforcement sections (132) on the two sides satisfy the following relationship: d1 ≤ d2 ≤ 1.3*d1.

16. The electrode assembly (100) according to any one of claims 1 to 15, wherein the reinforcement layer (13) is provided on the cathode current collector (21), and the reinforcement layer (13) is entirely in contact with a surface of the cathode current collector (21).

17. The electrode assembly (100) according to claim 16, wherein at least part of the surface of the cathode current collector (21) is provided with a cathode active material layer (22); and in the first direction (x), an outer surface of the reinforcement layer (13) does not protrude from an outer surface of the cathode active material layer (22).

18. The electrode assembly (100) according to any one of claims 1 to 17, wherein the anode current collector (11) and the cathode current collector (21) are each provided with a reinforcement layer (13) on the lead-out side of the anode tab (112), the anode tab (112) is led out along a second direction (y) relative to the anode main body portion (111), the second direction (y) being perpendicular to the first direction (x), and in the second direction (y), the reinforcement layer (13) provided on the anode current collector (11) extends beyond the reinforcement layer (13) provided on the cathode current collector (21).

19. A battery cell (200), comprising:
a housing (210) having an opening (211);
an electrode assembly (100) of any one of claims 1 to 18, arranged inside the housing (210); and
an end cap assembly (220), configured to close the opening (211).

20. A battery (300), comprising:
a case assembly (301); and
a battery cell (200) of claim 19, the battery cell (200) being arranged inside the case assembly (301).

21. A power consuming device, comprising a battery cell (200) of claim 19, the battery cell (200) being configured to supply electric energy to the power consuming device; or a battery (300) of claim 20, the battery (300) being configured to supply electric energy to the power consuming device.
